# EUROPEAN PATENT APPLICATION

(11) **EP 4 782 899 A1**
(43) Date of publication of application: **29.07.2026**
(21) Application number: 26152165.2
(22) Date of filing: 15.01.2026
(51) Int. Cl.: G02B 6/44, H02G 15/013

(54) **A CABLE GLAND FOR AN OPTICAL CLOSURE**

(30) Priority: 17.01.2025 IT 202500000750
(71) Applicant: Prysmian S.p.A., 20126 Milano (IT)
(72) Inventor: Abbiati, Fabio, 20126 Milano (IT)
(74) Representative: Perani & Partners S.p.A.

(57) **Abstract**

A cable gland (1) for an optical closure (100) comprising: a gland body (10) configured to be inserted at least in part in an optical closure channel (110) of the optical closure (100) along an insertion direction (X-X) and to define at least one cable channel (2) for passage of optical cables, the gland body (10) comprising: a first gland member (20) configured to be attached to the optical closure (100); a second gland member (30) coupled with the first gland member (20); a deformable member (40) arranged between the first and second gland member (20, 30); a retaining arrangement (50) configured to retain the gland body (10) along the insertion direction (X-X) and to mutually approach the first gland member (20) and the second gland member (30) to radially deform the deformable member (40) and generate a sealing action of the deformable member (40) in the optical closure channel (110), the retaining arrangement (50) comprises a first retaining member (60) retained in the first gland member (20); a second retaining member (70) retained at least in part in the second gland member (30) and configured to engage the first retaining member (60) passing through the deformable member (40) to mutually approach the first and second gland members (20, 30).

## Description

### Field of the invention

The present invention relates to the field of equipment and components for the connection of optical cables to an optical closure.

### Background of the invention

Typically, an optical closure comprises a base having a plurality of openings wherein a bunch of optical cables are inserted for splicing and/or to connect them to the network. In some cases, specific designed seals are used to retain optical cables to the openings. These solutions suffer of an uncorrected coupling between the openings and the seals other than the need of split to introduce a pre-connectorized cable. In other cases, complex and bulky cable box reducers are used to retain the optical cables in the optical closure openings. Such reducers hold a plurality of optical cables and usually comprise two coupling halves. The latter are able to retain the optical cables as well as pre-connectorized but comprise complex compression mechanism which reduces the available space in the cable closure.

EP 2 812 744 discloses an enclosure arrangement comprising a base defining at least one cable port at a first end, the cable port leading from an exterior of the base to an interior of the base, a duct extending through the at least one cable port and defining an axial passage therethrough, the duct including stops extending inwardly into the axial passage at an interior end of the duct. The enclosure arrangement further comprises a cable fixation assembly coupled to an optical fiber cable, the cable fixation assembly retaining at least one strength member of the optical fiber cable and a seal block assembly disposed in the duct, the seal block assembly defining an axial passage through which the optical fiber cable passes, the seal block assembly being secured to the duct, the seal block assembly being latched to the interior end of the duct, the seal block assembly extending from a first end to a second end, and wherein the seal block assembly includes a first housing portion that extends from a first end to a second end and defines at least one axial passage extending therebetween, the first housing portion forming the first end of the seal block assembly, the first end of the first housing portion defining a stop surface and including at least one latching finger extending outwardly past the stop surface in an axial direction, a second housing portion that defines at least at least one axial passage, a gasket disposed between the first housing portion and the second housing portion, the gasket defining at least one axial passage that aligns with the at least one axial passage of the first housing portion and the at least one axial passage of the second housing portion, and an activation assembly that axially compresses the gasket when actuated.

EP2136118 A1 discloses a device for sealing cables through containers for optical fibres comprises a support frame, a first compression element mounted on the support frame, a second compression element mounted on the support frame and a deformable element mounted on the support frame between the first and second compression elements. The device is insertable in an inlet/outlet duct of a container for optical fibres and has at least one passage for a cable, formed through the first and second compression elements and through the deformable element. Means for moving the first compression element close to the second compression element allows radial deformation of the deformable element in such a manner as to obtain a sealing action of the deformable element on an inner wall of the duct and a sealing action of the deformable element on the cable located in the respective passage. Coupling means placed at a distal end of the support frame spaced apart from the first compression element allows the device to be secured to the container in an integral manner.

### Summary of the invention

The applicant has tackled the problem of providing a cable gland for an optical closure to improve the available space for cables entering in a cable closure and at the same time to correctly seal the channel wherein is inserted.

The Applicant has found that a gland body with a deformable member arranged between a first and second gland members movable to radially deform the deformable member by means of the retaining arrangement which comprises a first retaining member retained in the first gland member and a second retaining member retained at least in part in the second retaining member and configured to engage the first retaining member passing through the deformable member to mutually approach the first and second gland members, improves the available space in the cable closure providing at the same time a correct seal of the channel wherein it is inserted.

Therefore, the present invention relates to a cable gland for an optical closure comprising a gland body configured to be inserted at least in part in an optical closure channel of the optical closure along an insertion direction and to define at least one cable channel for passage of optical cables, the gland body comprising: a first gland member configured to be attached to the optical closure; a second gland member coupled with the first gland member; a deformable member arranged between the first and second gland member; a retaining arrangement configured to retain the gland body along the insertion direction and to mutually approach the first gland member and the second gland member to radially deform the deformable member and generate a sealing action of the deformable member in the optical closure channel. The retaining arrangement comprises: a first retaining member retained in the first gland member, a second retaining member retained at least in part in the second gland member and configured to engage the first retaining member passing through the deformable member to mutually approach the first and second gland members.

According to one embodiment, the first gland member comprises a first retaining seat configured to retain the first retaining member and accommodate a portion of the second retaining member.

According to one embodiment, the first gland member comprises a base portion defining the first retaining seat, the base portion being configured to cooperate with the first retaining member to act on the deformable member and to mutually approach the first gland member and the second gland member.

According to one embodiment, the second gland member comprises a second retaining seat configured to retain a portion of the second retaining member.

According to one embodiment, the second retaining member extends along an extension direction between a first retaining portion and second retaining portion, the first retaining portion being retained in the second retaining seat and the second retaining portion being configured to engage the first retaining member passing through the deformation member.

According to one embodiment, the first retaining member comprises a disc shaped body having at least one first retaining channel for defining a portion of the cable channel and at least one second retaining channel configured to receive and retain at least a portion of the second retaining member.

According to one embodiment, the second retaining channel has an inner thread and the second retaining member has an outer thread configured to be coupled with the inner thread with a nut-screw coupling such that the first and second gland members mutually approach upon screwing the second retaining member in the first retaining member.

According to one embodiment, the first gland member extends along the insertion direction and comprises a first body having a first lateral wall extending between a first and second gland end portion; the first retaining seat being formed in the first body and having an insertion opening formed in the first lateral wall for insertion of the first retaining member into the first retaining seat.

According to one embodiment, the first gland member, the second gland member and the deformable member have respectively at least a first channel, a second channel and a third channel configured to be aligned to define the cable channel; the deformable member has a passing through channel configured to accommodate at least in part the second retaining member

According to one embodiment, the cable gland further comprises an axial locking arrangement to lock the first gland member with the optical closure channel along the insertion direction, the axial locking arrangement comprising first axial locking elements associated to the first gland member to engage a portion of the optical closure upon insertion in the optical closure channel, the first axial locking elements comprising elastic deformable wings configured to elastically deform along a transversal direction transversal to the insertion direction for engaging a portion of the optical closure.

The present invention further relates to a cable gland assembly comprising an optical closure comprising a base having one or more optical closure channels extending along an insertion direction between first insertion openings and second insertion openings; one or more cable glands according to one embodiment of the present invention, one or more gland bodies of relative cable glands being arranged at least in part in a respective optical closure channel along the insertion direction; one or more optical cables arranged into a relative cable channel of a cable gland.

According to one embodiment, the cable gland assembly further comprises an axial and rotational locking arrangement configured to prevent mutual rotation about a longitudinal axis extending along the insertion direction and mutual motion along the longitudinal axis of the cable gland relative to the optical closure.

According to one embodiment, the axial and rotational locking arrangement comprises first locking elements associated to the first gland member, second locking elements associated to the optical closure channels proximate to the second insertion openings and configured to be attached to the first locking elements.

According to one embodiment, the first locking elements comprise respectively first locking apertures formed in the first gland member, the second locking elements comprise second locking wings projecting along the insertion direction from the base proximate to the second insertion openings, each second locking wing comprises a second locking aperture, the axial and rotational locking arrangement comprises third locking elements configured to attach the first locking elements to the second locking elements, the third locking elements comprising locking screws configured to couple the first and second locking apertures.

According to one embodiment, the axial and rotational locking arrangement comprises: retaining brackets configured to engage the second locking elements for rotationally lock the first gland member and to engage the first locking element to axially lock the first gland member, each retaining bracket comprising a first locking portion configured to engage a second locking element and a second locking portion inwardly projecting from the first locking portion and configured to engage the first locking element, the third locking element being configured to attach the first locking elements and the second locking elements to the retaining brackets.

According to one embodiment, each first locking portion comprises a locking channel configured to receive and retain the third locking element; each first locking portion comprises a locking groove configured to engage and hold the second locking wing.

### Brief description of the drawings

The present invention will now be described in more detail hereinafter with reference to the accompanying drawings, in which some embodiments of the invention are shown.
FIG. 1 is a perspective view of a cable gland for an optical closure according to one embodiment of the present invention with a member dissembled;
FIG. 2 is a perspective view of a cable gland for an optical closure according to one embodiment of the present invention;
FIG. 3 is a perspective view of a cable gland for an optical closure according to one embodiment of the present invention;
FIG. 4 is a perspective view of a cable gland for an optical closure according to one embodiment of the present invention;
FIG. 5 is a section view of the cable gland assembled in an optical closure according to one embodiment of the present invention;

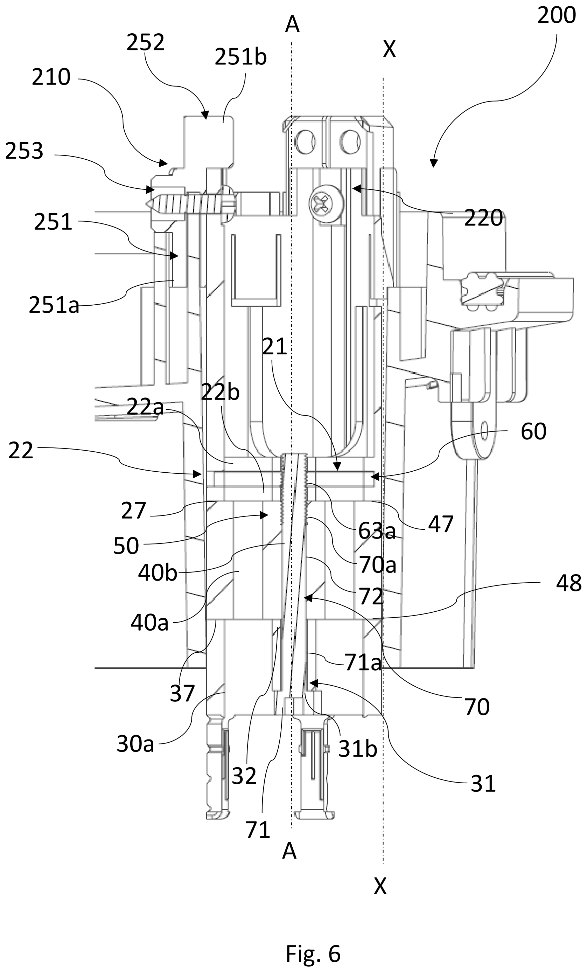

FIG. 6 is a further section view of the cable gland for an optical closure according to one embodiment of the present invention;

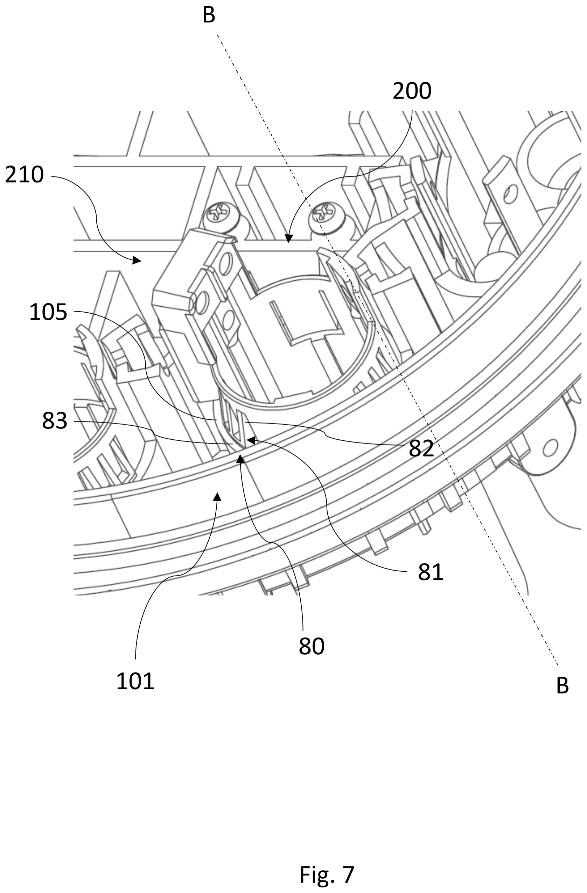

FIG. 7 is a perspective view of the cable gland assembled in an optical closure according to one embodiment of the present invention.

### Detailed description

Figures shows a cable gland 1 for an optical closure 100 for connecting one or more optical cables to the optical closure 100.

For the purpose of the present invention, the optical cable can be both a pre-connectorized optical cable or a ready for splicing optical cable. The optical cable has an insertion head configured to be arranged inside the optical closure 100 and a retaining portion extending from the insertion head along the development of the optical cable. The cable gland 1 is configured to retain the retaining portion of the optical cable to hold the insertion head into the optical closure 100.

According to one embodiment, the cable gland 1 is configured to provide a sealing action in a relative optical closure channel 110 of the optical closure 100 wherein the cable gland 1 is inserted.

The cable gland 1 comprises a gland body 10 configured to be attached to an optical closure 100. In particular, the gland body 10 is configured to be inserted at least in part in an optical closure channel 110 of the optical closure 100 along an insertion direction X-X.

According to one embodiment, the gland body 10 is configured to be inserted in an opening present on the base of the optical closure for the passage of a cable.

The gland body 10 is configured to define at least one cable channel 2 for passage of optical cables. In particular, the gland body 10 has one or more cable channels 2 extending along the insertion direction X-X. Each cable channels 2 is configured for passage of an optical cable. Each cable channel 2 extends between a first cable opening 2a and a second cable opening 2b along the insertion direction X-X. The first cable opening 2a is configured to receive the optical cable during the insertion of the optical cable into the cable channel 2, while the second cable opening 2b is configured to receive the optical cable when the optical cable passes over the cable channel 2.

The gland body comprises a first gland member 20, a second gland member 30 and a deformable member 40.

The first gland member 20 is configured to be attached to the optical closure 100. The second gland member 30 is coupled with the first gland member 20. The deformable member 40 is arranged between the first and the second gland member 20, 30. According to one embodiment, the first gland member 20, the second gland member 30 and the deformable member 40 are configured to be stacked along the insertion direction X-X and to be inserted at least in part into the closure channel 110.

The cable gland 1 comprises a retaining arrangement 50 configured to retain the gland body 10 along the insertion direction X-X and to mutually approach the first gland member 20 and the second gland member 30 to radially deform the deformable member 40 and generate a sealing action of the deformable member 40 in the optical closure channel 110.

According to one embodiment, the retaining arrangement 50 is configured to move the second gland members 30 towards the first gland member 20 in order to deform the deformable member 40.

Thanks to the mutual approach of the first gland member 20 and second gland member 30 , the deformable member 40 is deformed providing sealing effect into the closure channel 110. It is to be noted that upon deformation, the deformable member 40 can also seal the optical cable passing through and retain at least in part the optical cable passing through.

According to the preferred embodiment, the retaining arrangement 50 comprises a first retaining member 60 and a second retaining member 70.

The first retaining member 60 is retained in the first gland member 20, while the second retaining member 70 is retained at least in part in the second gland member 30. The first and second retaining members 60, 70 are configured to mutually engage and be retained by each other, forming an integrated structural coupling. The second retaining member 70 is configured to engage the first retaining member 60 passing through the deformable member 40 to mutually approach the first and second gland members 20, 30. Specifically, the second retaining member 70 engages the first retaining member 60 after passing through the deformable member 40, and the first retaining member 60 is configured to receive and structurally retain the second retaining member 70 within this engagement to achieve the mutual approach of the first and second gland members 20, 30.

Thanks to the arrangement of the first and second retaining member 60, 70 and then of the retaining arrangement 50 into the first and second gland member 20, 30 and into the deformable member 40, a compact and saving space arrangement is provided for sealing the closure channel 110 and at the same time to retain the gland body and eventually the optical cables.

According to one embodiment, the first retaining member 60 is retained and arranged into the first gland member 20. According to one aspect, the first retaining member 60 is entirely arranged into the first gland member 20. The first retaining member 60 is therefore interchangeable as a function of the number of the cable channels 2.

The first retaining member 60 being retained into the first gland member 20 is configured to cooperate with the second retaing member 70 to uniformly shift the second gland member 30 along the insertion direction X-X for deforming the deformable member 40.

According to one embodiment, the first gland member 20 comprises a first retaining seat 21 configured to house and retain the first retaining member 60 and accommodate a portion of the second retaining member 70. According to one aspect, the first retaining seat 21 is configured to retain also a portion of the second retaining member 70 upon engagement of the second retaining member 70 with the first retaining member 60. The first retaining member 60 can be inserted and extracted into and from the first retaining seat 21. According to one aspect, the first retaining seat 21 can define a space for the mutual engagement between the first and second retaining members 60, 70, and is thus configured to accommodate a portion of the second retaining member 70 such that it can be engaged and retained by the first retaining member 60 therein.

According to one embodiment, the first gland member 20 extends along the insertion direction X-X and comprises a first body 23 having a first lateral wall 24 extending between a first and second gland end portions 25, 26. The first lateral wall 24 has a first outer gland surface configured to engage the optical closure 100.

According to one embodiment, the second gland member 30 extends along the insertion direction X-X and comprises a second body 33 having a second lateral wall 34 extending between a third and fourth gland end portions 35, 36. The second lateral wall 34 has a second outer gland surface configured to engage the optical closure 100.

According to one embodiment, the deformable member 40 extends along the insertion direction X-X and comprises a deformable body 43 having a deformable lateral wall 44 extending between a first and second deformable end portions 45, 46. The deformable body 43 has a deformable outer gland surface configured to engage the optical closure 100 for sealing the closure channel 110.

The first and second gland members 20, 30 have respectively at the first and fourth end portions 25, 36 a first and second engagement surface 27, 37 and relative opposed surfaces 28, 38. The deformable member 40 has at the first and second deformable end portions 45, 46 respectively a third and fourth engagement surface 47, 48 configured to respectively engage the second and the first engagement surface 27, 37.

The first retaining seat 21 is formed in the first body 23 and has an insertion opening 21a formed in the first lateral wall 24 for insertion of the first retaining member 60 into the first retaining seat 21. It is to be noted that the insertion opening 21a is also configured to allow the extraction of the first retaining member 60 from the first retaining seat 21.

According to one embodiment, the first gland member 20, the second gland member 30 and the deformable member 40 have respectively at least a first channel 20a, a second channel 30a and a third channel 40a configured to be aligned to define the cable channel 2. Each channel 20a, 30a, 40a extends along the insertion direction X-X between relative openings formed on the engagement surfaces 27, 37, 47, 48 and on relative opposed surfaces 28, 38. The latter correspond to the second cable openings 2b and a first cable openings 2a.

The at least third channel 40a is configured to shrink upon the deformation of the deformable member 40 and can retain and seal a portion of the optical cable passing through.

In particular, the deformable member 40 has at least a further passing through channel 40b configured to accommodate at least in part the second retaining member 70 upon engagement of the second retaining member 70 with the first retaining member 60. The further passing through channel 40b extends along the insertion direction X-X between relative openings formed on the engagement surfaces 47, 48.

According to one aspect, the first channel 20a, the second channel 30a are respectively formed in the first body 23, second body 33 while the third channel 40a and the further passing through channel 40b are formed in the deformable body 43.

According to one embodiment, gland body 10 has a cylindrical shape or a prismatic shape with ovoidal base. Thanks to this shape, the gland body can be easily arranged into closure channel 110 on the optical closures 100 having a relative footprint.

According to one embodiment, the first gland member 20 comprises a base portion 22 defining the first retaining seat 21. The base portion 22 is configured to act on the deformable member 40. The base portion 22 is arranged proximate to the first end portion 24 defining the relative engagement surface 27. The first retaining member 60 is configured to act on the base portion 22 to compress the deformable member 40, preferably in a uniform way.

According to one embodiment, the base portion 22 has a first base element 22a and second base element 22b mutually spaced apart along the insertion direction X-X and defining therebetween the first retaining seat 21. The first and second elements 22a, 22b have openings mutually aligned which define the at least one first channel 20a and to allow the passage of the second retaining member 70.

In particular, the base portion 22 is configured to cooperate with the first retaining member 60 to act on the deformable member 40 through the first base element 22a and to move the second gland member 30 towards the first gland member 20.

According to one embodiment, the first retaining member 60 is configured to distribute a compression force on the deformable member 40 upon engagement with the second retaining member 70 and approaching of the first and second gland members 20, 30.

Namely, the base portion 22 can distribute through the action of the first retaining member 60 a compression force on the deformable member 40. At the same time, the second gland member 30 acts on the deformable member 40 providing a distributed compression force on the deformable member 40.

According to one embodiment, the second gland member 30 comprises a second retaining seat 31 configured to retain a portion of the second retaining member 70.

In particular, the second retaining seat 31 is configured to engage and retain a portion of the second retaining member 70 upon engagement of the second retaining member 70 with the first retaining member 60 to mutually approach the second gland member 30 and the first gland member 20. Namely, the second gland member 30 has a relative base portion 32 at the fourth end portion 36 configured to act on deformable member 40.

The first and second retaining seats 21, 31 comprise a relative first and second retaining openings 21b, 31b configured to allow the passage of the second retaining member 70 and the engagement with the first retaining member 60 with the second retaining member 70. The first retaining openings 21a are formed on the first and second base member 22a, 22b.

According to one embodiment, the second retaining member 70 extends along an extension direction A-A between a first retaining portion 71 and second retaining portion 72. The first retaining portion 71 is retained in the second retaining seat 31 and the second retaining portion 72 is configured to engage the first retaining member 60 passing through the deformation member 40.

According to one embodiment, the first retaining member 60 comprises a disc shaped body 61 having at least one first retaining channel 62 for defining a portion of the cable channel 2 and at least one second retaining channel 63 configured to receive and retain at least a portion of the second retaining member 70, preferably the second retaining portion 72. Accordinlgy, the first retaining member 60 actively retains the second retaining member 70.

The first retaining channel 62 is configured to be aligned with the first, second and third channels 20a, 30a, 40a while the at least second retaining channel 63 is configured to be aligned with the at least one further passing through channel 40b and second retaining seat 71. Accordingly, the second retaining seat 71 can comprise one or more third retaining channels 71a configured to receive a portion of the second portion of the second retaining member 72 and to be aligned with the second retaining channel 63 and relative openings.

According to one embodiment, the number of the first retaining channels 62 and the number of cable channels 2 are the same. Accordingly, the number of the second retaining channels 63, the number of further passing through channels 40b and the number of the third retaining channels 71a are the same.

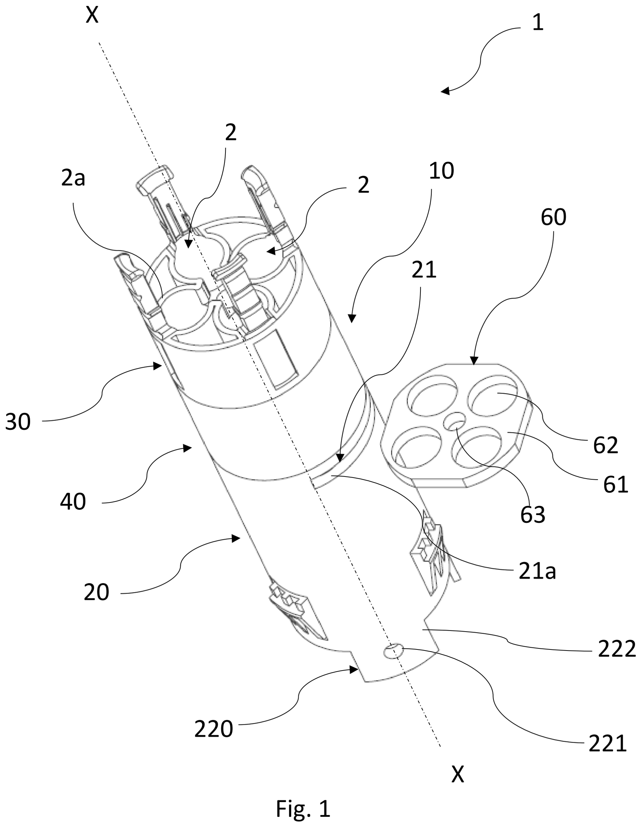

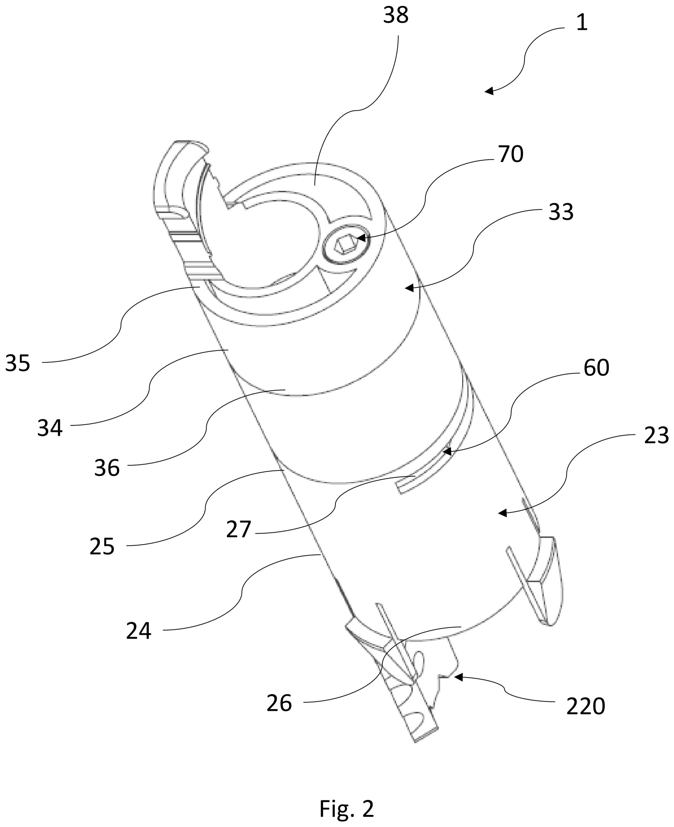

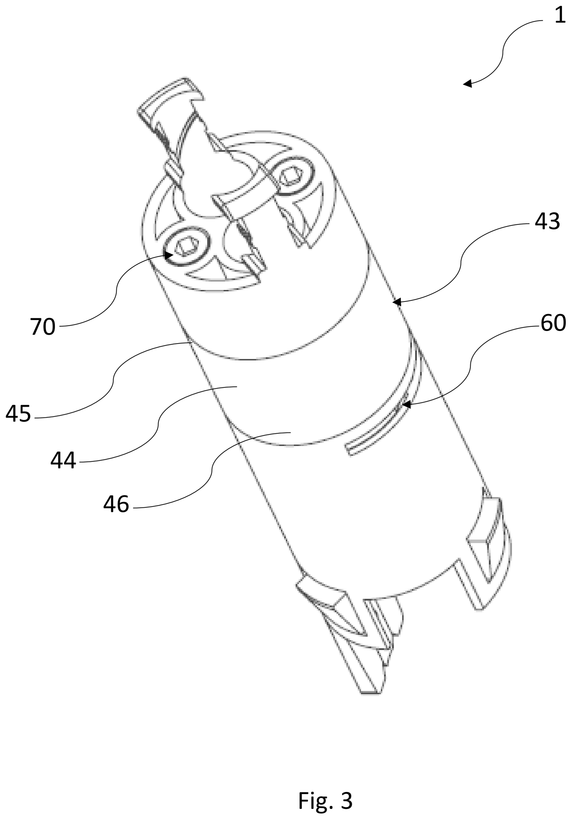

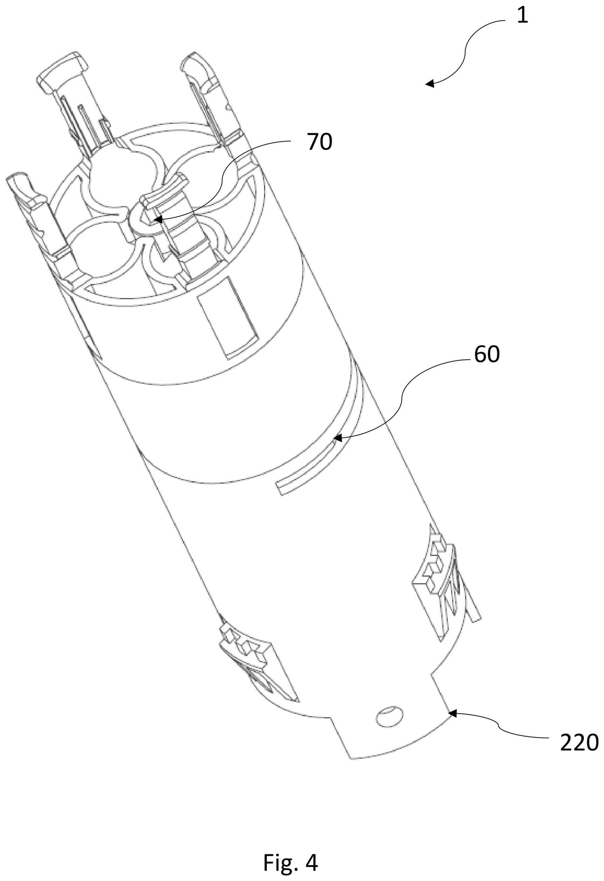

According to the embodiments shown in figures 1 and 4, the first retaining member 60 has one second retaining channel 63 formed in a central area and first retaining channels 62 formed in a perimetral area surrounding the central area. According to the embodiment shown in figure 3, the first retaining member 60 has two second retaining channels 63 and two first retaining channels 62 formed in a perimetral area. According to the embodiment shown in figure 2, the first retaining member 60 has one second retaining channel 63 and one first retaining channel 62 formed in a perimetral area.

The disc shaped body 61 cooperating with second retaining member 70 is configured to uniformly move the second gland member 30 towards the first gland member 20 such that the deformable member 40 is uniformly deformed. Namely, the disc shaped body 61 can uniformly distribute the compression force of the first gland member 20 on the engagement surface 27 to deform the deformable member 40.

Thanks to the disc shaped body 61, the second gland member 30 uniformly shifts along the insertion direction X-X such that the first and second gland members 20, 30 mutually approach deforming the deformable member 40.

According to one embodiment, the first retaining member 60 can be made in metal.

According to one embodiment, the second retaining channel 63 has an inner thread 63a.

Accordingly, the second retaining member 70 has an outer thread 70a configured to be coupled with the inner thread 63a with a nut-screw coupling such that the first and second gland members 20, 30 mutually approach upon screwing the second retaining member 70 in the first retaining member 60.

According to one embodiment, the cable gland 1 further comprises an axial locking arrangement 80 to lock the first gland member 20 with the optical closure channel 100 along the insertion direction X-X.

The axial locking arrangement 80 comprises first axial locking elements 81 associated to the first gland member 20 to engage a portion of the optical closure 100 upon insertion in the optical closure channel 110. The first axial locking elements 81 comprises elastic deformable wings 82 configured to elastically deform along a transversal direction Y-Y transversal to the insertion direction X-X for engaging a portion of the optical closure 100. It is to be noted that the elastic deformable wings 82 project from the outer surface of the first lateral wall 24.

In detail, during the insertion of the gland body 10 into the closure channel 110, each deformable wing 82 deforms inwardly toward the centre of the first gland body 20 and, upon engagement the optical closure 100, deforms outwardly engaging the optical closure 100. In the present case, the engagement is reached when the deformable wings 82 extends totally inside the cable closure 100.

According to one embodiment, the axial locking arrangement 80 comprises second axial locking elements 83 formed on the optical closure 110 configured to engage the first locking elements 81. The second axial locking elements 83 can comprise seats formed to the closure channel 110 in the cable closure 100 and configured to receive and retain the elastic deformable wings 82 upon insertion of the gland body 10 into the closure channel 110, thereby preventing axial motion of the gland body 10 relative to the closure channel 110 along the insertion direction X-X.

The first axial locking elements 81 are angularly spaced.

The first axial locking elements 81 are formed at the second end portion 24.

In detail, the axial locking arrangement 80 defines a snap-fit engagement with the optical closure 110.

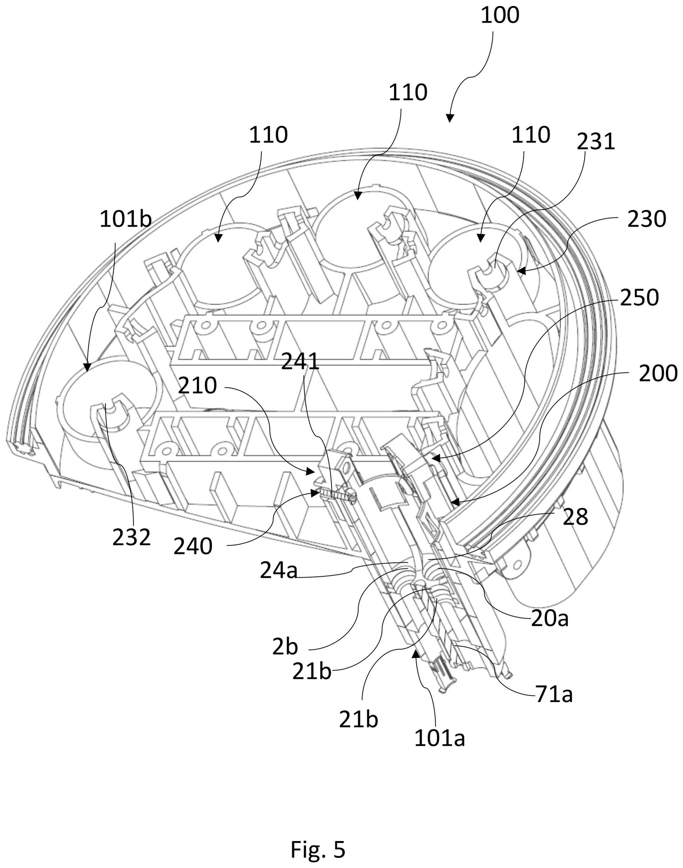

It is further object of the present invention a cable gland assembly 200 shown in figure 5.

The cable gland assembly 200 comprises an optical closure 100.

The optical closure 100 comprises a base 101 having one or more optical closure channels 110 extending along an insertion direction X-X between first insertion openings 101a and second insertion openings 101b. Each closure channel 110 comprises at the second insertion opening 101b an engaging edge 105 configured to engage a portion of the gland body 10 as above reported. Namely, the engaging edge 105 defines the second locking axial locking elements 83. Furthermore, each closure channel 110 has an inner surface configured to engage with the cable gland 1.

The cable gland assembly 200 comprises one or more cable glands 1. The cable glands 1 are arranged at least in part in a respective closure channel 110 along the insertion channel.

The cable gland assembly 200 further comprises one or more optical cables arranged into a relative cable channel 2 of the cable gland 1.

According to one embodiment, the cable gland assembly 200 comprises an axial and rotational locking arrangement 210 configured to prevent mutual rotation about a longitudinal axis B-B extending along the insertion direction X-X and mutual motion along the longitudinal axis B-B of the cable gland 1 relative to the optical closure 100.

The axial and rotational locking arrangement 210 comprises a first locking element 220 associated to the first gland member 20 and a second locking element 230 associated to the optical closure channels 110 proximate to the second insertion openings 101b and configured to be attached to the first locking element 220.

According to one embodiment, the axial and rotational locking arrangement 210 can comprise two or more first and second locking elements 220, 230 mutually spaced apart.

The first locking element 220 comprises a first locking aperture 221 formed in the first gland member 220. According to one embodiment, the first locking element 220 comprises a first locking wing 222 projecting from the second end portion 26 along the insertion direction X-X on which the first locking aperture 221 is formed.

The second locking element 230 comprises a second locking wing 231 projecting along the insertion direction X-X from the base 101 proximate to the second insertion openings 101b. Each second locking wing 231 comprises a second locking aperture 232.

According to one embodiment, the axial and rotational locking arrangement 210 comprises a third locking element 240 configured to attach the first locking element 220 to the second locking element 230. The third locking element 240 can comprise locking screws 241 configured to couple the first and second locking apertures 221, 231.

According to one embodiment, the axial and rotational locking arrangement 210 comprises retaining brackets 250 configured to engage the second locking elements 230 for rotationally lock the first gland member 20 and to engage the first locking element 220 to axially lock the first gland member 20.

Each retaining bracket 250 comprises a first locking portion 251 configured to engage a second locking element 230 and a second locking portion 252 inwardly projecting from the first locking portion 251 and configured to engage the first locking element 220.

The first locking portion 251 extends between a first locking base 251a and a second locking base 251b along the extension direction X-X. The first locking base 251a is proximate to the base 101 when the retaining bracket 250 engages the second locking element 230. The second locking base 251b is spaced apart from the first locking base 251a along the extension direction X-X. The second locking portion 252 projects from the second locking base 251b inwardly with respect to the closure channel 110.

It is to be noted that the third locking element 240 is configured to attach the first locking elements 220 and the second locking elements 230 to the retaining brackets 250.

According to one embodiment, each first locking portion 251 comprises a locking channel 253 configured to receive and retain the third locking element 240.

According to one embodiment, each first locking portion 251 comprises a locking groove configured to engage and hold the second locking wing 231.

## Claims

1. A cable gland (1) for an optical closure (100) comprising:
- a gland body (10) configured to be inserted at least in part in an optical closure channel (110) of the optical closure (100) along an insertion direction (X-X) and to define at least one cable channel (2) for passage of optical cables, the gland body (10) comprising:
- a first gland member (20) configured to be attached to the optical closure (100);
- a second gland member (30) coupled with the first gland member (20);
- a deformable member (40) arranged between the first and second gland member (20, 30);
- a retaining arrangement (50) configured to retain the gland body (10) along the insertion direction (X-X) and to mutually approach the first gland member (20) and the second gland member (30) to radially deform the deformable member (40) and generate a sealing action of the deformable member (40) in the optical closure channel (110),
wherein the retaining arrangement (50) comprises:
- a first retaining member (60) retained in the first gland member (20);
- a second retaining member (70) retained at least in part in the second gland member (30) and configured to engage the first retaining member (60) passing through the deformable member (40) to mutually approach the first and second gland members (20, 30).

2. The cable gland (1) according to claim 1, wherein:
- the first gland member (20) comprises a first retaining seat (21) configured to retain the first retaining member (60) and accommodate a portion of the second retaining member (70).

3. The cable gland (1) according to claim 2, wherein:
- the first gland member (20) comprises a base portion (22) defining the first retaining seat (21);
- the base portion (22) being configured to cooperate with the first retaining member (60) to act on the deformable member (40) and to mutually approach the first gland member (20) and the second gland member (30).

4. The cable gland (1) according to any claims 1 to 3, wherein
- the second gland member (30) comprises a second retaining seat (31) configured to retain a portion of the second retaining member (70).

5. The cable gland (1) according to claim 4, wherein:
- the second retaining member (70) extends along an extension direction (A-A) between a first retaining portion (71) and second retaining portion (72), the first retaining portion (71) being retained in the second retaining seat (31) and the second retaining portion (72) being configured to engage the first retaining member (60) passing through the deformable member (40).

6. The cable gland (1) according to any claims 1 to 5, wherein:
- the first retaining member (60) comprises a disc shaped body (61) having at least one first retaining channel (62) for defining a portion of the cable channel (2) and at least one second retaining channel (63) configured to receive and retain at least a portion of the second retaining member (70).

7. The cable gland (1) according to claim 6, wherein:
- the second retaining channel (63) has an inner thread (63a);
- the second retaining member (70) has an outer thread (70a) configured to be coupled with the inner thread (63a) with a nut-screw coupling such that the first and second gland members (20, 30) mutually approach upon screwing the second retaining member (70) in the first retaining member (60).

8. The cable gland (1) according to any claims 2 to 7, wherein:
- the first gland member (20) extends along the insertion direction (X-X) and comprises a first body (23) having a first lateral wall (24) extending between a first and second gland end portion (25, 26); the first retaining seat (21) being formed in the first body (23) and having an insertion opening (27) formed in the first lateral wall (24) for insertion of the first retaining member (60) into the first retaining seat (21).

9. The cable gland (1) according to any claims 1 to 8, wherein:
- the first gland member (20), the second gland member (30) and the deformable member (40) have respectively at least a first channel (20a), a second channel (30a) and a third channel (40a) configured to be aligned to define the cable channel (2);
- the deformable member (40) has a passing through channel (40b) configured to accommodate at least in part the second retaining member (70);

10. The cable gland (1) according to any claims 1 to 9, further comprising
- an axial locking arrangement (80) to lock the first gland member (20) with the optical closure channel (100) along the insertion direction (X-X), the axial locking arrangement (80) comprising first axial locking elements (81) associated to the first gland member (20) to engage a portion of the optical closure (100) upon insertion in the optical closure channel (110), the first axial locking elements (81) comprising elastic deformable wings (82) configured to elastically deform along a transversal direction (Y-Y) transversal to the insertion direction (X-X) for engaging a portion of the optical closure (100).

11. A cable gland assembly (200) comprising:
- an optical closure (100) comprising a base (101) having one or more optical closure channels (110) extending along an insertion direction (X-X) between first insertion openings (101a) and second insertion openings (101b);
- one or more cable glands (1) according to any claims 1 to 10, one or more gland bodies (10) of relative cable glands (1) being arranged at least in part in a respective optical closure channel (110) along the insertion direction (X-X);
- one or more optical cables arranged into a relative cable channel (2) of a cable gland (1).

12. The cable gland assembly (200) according to claim 11, further comprising:
- an axial and rotational locking arrangement (210) configured to prevent mutual rotation about a longitudinal axis (B-B) extending along the insertion direction (X-X) and mutual motion along the longitudinal axis (B-B) of the cable gland (1) relative to the optical closure (100).

13. The cable gland assembly (200) according to claim 12, wherein the axial and rotational locking arrangement (210) comprises:
- first locking elements (220) associated to the first gland member (20);
- second locking elements (230) associated to the optical closure channels (110) proximate to the second insertion openings (101b) and configured to be attached to the first locking elements (220).

14. The cable gland assembly (200) according to claim 13, wherein
- the first locking elements (220) comprise respectively first locking apertures (221) formed in the first gland member (220);
- the second locking elements (230) comprise second locking wings (231) projecting along the insertion direction (X-X) from the base (101) proximate to the second insertion openings (101b), each second locking wing (231) comprises a second locking aperture (232);
- the axial and rotational locking arrangement (210) comprises third locking elements (240) configured to attach the first locking elements (220) to the second locking elements (230);
- the third locking elements (240) comprising locking screws (241) configured to couple the first and second locking apertures (221, 231).

15. The cable gland assembly (200) according to claim 14, wherein the axial and rotational locking arrangement (210) comprises:
- retaining brackets (250) configured to engage the second locking elements (230) for rotationally lock the first gland member (20) and to engage the first locking element (220) to axially lock the first gland member (20), each retaining bracket (250) comprising a first locking portion (251) configured to engage a second locking element (230) and a second locking portion (252) inwardly projecting from the first locking portion (251) and configured to engage the first locking element (220);
- the third locking element (240) being configured to attach the first locking elements (220) and the second locking elements (230) to the retaining brackets (250).

16. The cable gland assembly (200) according to claim 15, wherein
- each first locking portion (251) comprises a locking channel (253) configured to receive and retain the third locking element (240);
- each first locking portion (251) comprises a locking groove (254) configured to engage and hold the second locking wing (231).
